# EUROPEAN PATENT SPECIFICATION

(11) **EP 3 954 910 B1**
(45) Date of publication and mention of the grant of the patent: **30.07.2025**
(21) Application number: 21173262.3
(22) Date of filing: 11.05.2021
(51) Int. Cl.: F16B 13/08, F16B 13/06, F16B 13/04, F16B 13/12

(54) **IMPROVED EXPANSION ANCHOR**
VERBESSERTER SPREIZANKER
ANCRAGE D'EXPANSION AMÉLIORÉ

(30) Priority: 14.08.2020 EP 20191109; 14.08.2020 EP 20191102
(43) Date of publication of application: 16.02.2022
(73) Proprietor: Illinois Tool Works, Inc., Glenview, Illinois 60025 (US)
(72) Inventor: COUVREUR, Jerome, Glenview, Illinois 60025 (US); MARASCO, Jean-Paul, Glenview, Illinois 60025 (US)
(74) Representative: HGF

(56) References cited:
- EP-A1- 3 825 561
- EP-B1- 1 338 803
- FR-A1- 2 611 005
- US-A- 4 182 217
- US-A1- 2012 195 707
- US-B1- 6 719 509

## Description

The present invention relates to an expansion anchor, in particular, but not exclusively, to an expansion anchor suitable for use in the construction sector for anchoring, such as for a load to a wall and/or for a load to a top of a surface.

### Background

There are two different types of expansion anchor currently known. A first type of expansion anchor consists of anchors made entirely of plastic, some of which are designed for anchoring to walls made of bricks with internal partitions defining internal cavities which are hollow or filled with low-density material, and/or walls made of a relatively friable or non-homogeneous materials, such as multi-layer walls, wall made of loose (i.e. not very compact) granular-concrete, and/or walls made of compact material and therefore having a high density, such as concrete walls or walls made of natural stone or solid bricks, or another high-density material.

These plastic expansion anchors are used in a wide range of applications, but their use is limited to the anchoring of loads having a relatively low weight. Plastic expansion anchors are unable to anchor loads having medium duty weight. A plastic expansion anchor is disclosed in earlier patent application US 4,182,217 A1, specifically a so-called straddling dowel for securing a threadable element, such as a bolt or a screw, comprising a substantially cylindrical body of a plastic material. Also, earlier patent application FR 2,611,005 A1 discloses an expansion dowel for a screw, the expansion dowel comprising a split socket body and a wedge-shaped expansion element which can move axially under the action of the screw, like a nut, so as to expand the socket body.

The second type of anchor differs from the plastic expansion anchor essentially in that it includes a tubular body made of metal. The tubular body typically comprises a metal conduit with an anchoring tab. The anchor having the metal tubular body further comprises a conical body and a tightening screw. The conical body is attached at the end of the tightening screw. When in use, the screw is tightened which causes the conical body to move axially inside of the conduit. Wedges of the conical body are gradually urged or otherwise driven radially outwards between the anchoring tabs, moving them apart towards the inside wall of the hole in which the anchor is placed. The anchoring tabs are moved apart until they are positioned into abutment against the inside surface (i.e. hole) of the wall, securing the anchor into the hole in the wall using friction and using mechanical locking.

Metal anchors of this type are able to anchor loads to a greater extent compared to the plastic anchors. However, where there is a requirement to anchor even larger loads, even these types of anchors may not provide sufficient retention, capable of anchoring increased loads. Therefore, an anchor that is unable to provide the required retention may loosen or detach from the desired surface during use. Another problem associated with existing anchors is the lack of confirmation to a user that the anchor is completely, correctly, and securely fitted. Without such confirmation or indication to the user, a user may continue to tighten the anchor, causing overtightening of the anchor and/or damage to the surface in which the anchor is set. Yet, another problem associated with expansion anchors is the generation of pressure points from the expanding legs of the anchor that directly engage with the anchor screw thread. If the legs of the anchor expand in an uncontrolled manner, the contact between the legs of the anchor and the screw thread of the anchor causes damage to the anchor. In some instances, the damage is detrimental to the functioning of the anchor.

Therefore, it would be desirable to provide an expansion anchor that can alleviate or mitigate one or more of the aforementioned problems. Particularly, it is an object of the invention to provide an expansion anchor with a higher retention force, or at least which can be used for a greater range of applications. It is also an object of the invention to provide an expansion anchor which is capable of anchoring loads having an even higher weight. It is a further object of the invention to provide an anchor with an improved user experience, indicating the complete, correct and secure fitting of an expansion anchor.

The present invention provides at least an alternative to expansion anchors of the prior art.

### Summary of the Invention

In accordance with the present invention there is provided an expansion anchor according to the appended claims.

According to an aspect of the present invention, there is provided an expansion anchor comprising: a tubular sleeve having a longitudinal axis and comprising an expansion portion at a distal end and a body portion at a proximal end and expansion tabs attached to the body portion and extending towards the distal end; a tightening screw configured to move the expansion portion along the longitudinal axis inside the expansion tabs so as to expand the tabs radially outwardly relative to the longitudinal axis; at least one deformable leg extending between and attached to the body portion and to the expansion portion of the tubular sleeve, the deformable leg comprising at least two coupled segments, a distal segment, having a first attachment portion linking the distal segment to the expansion portion and a proximal segment, having a second attachment portion linking the proximal segment to the body portion, wherein the width of the proximal segment increases towards the proximal end of the tubular sleeve.

Thus, the deformable leg is reinforced near the proximal end. This provides a wider surface area at the proximal end of the deformable leg, allowing an increased surface area to be in contact with the wall, which improves the mechanical performance of the expansion anchor and increases the load capacity of the expansion anchor. Moreover, this allows the deformation of the deformable legs to be controlled, so as to prevent a pressure point onto the tightening screw to be generated.

Advantageously, in some embodiments, the first and second attachment portions may be circumferentially offset from each other about the longitudinal axis, so as to deform the deformable leg torsionally and radially outwardly relative to the longitudinal axis when moving the expansion portion from the distal end towards the proximal end. This is particularly beneficial because the proximal segment and the distal segment of the leg both engage with the surface to be engaged, in order to increase the surface area of engagement between the anchor and the surface.

Thus, deformable leg(s) expand radially outwardly and torsionally to engage with the surface in which the anchor is set. The proximal segment and the distal segment of the leg both engage with the surface to increase the surface area of engagement between the anchor and the surface. This improves mechanical stability of the anchor in the wall, which increases the load capacity of the expansion anchor. Moreover, there is provided an indication to the user of a complete and secure setting in comparison with an anchor having legs that deform only radially outward, not least because the user will experience more friction when the legs deform and engage with the surface.

Advantageously, in some embodiments, the width of the proximal segment may increase uniformly towards the proximal end.

Advantageously, in some embodiments, the width of the distal segment may increase towards the distal end of the tubular sleeve.

Advantageously, in some embodiments, the width of the distal segment may increase uniformly towards the distal end.

Advantageously, in some embodiments, the expansion tabs may have a first rigidity, and the deformable legs may have a second rigidity greater than the first rigidity. By providing deformable legs that have a rigidity greater than that of the expansion tabs, the deformable of the deformable legs can be controlled to avoid the generation of pressure points on the tightening screw.

Advantageously, in some embodiments, the at least one deformable leg may comprise a first line of weakening between the distal segment and the proximal segment, having a width less than the distal and proximal segments. This provides a predetermined point of deformable at which the distal and proximal segments move relative to one another.

Advantageously, said first line of weakening may have a width less than said distal and proximal segments.

According to the invention, said at least one deformable leg comprises an outwardly facing second line of weakening provided between said first attachment portion and said distal segment. Preferably, said second line of weakening may be positioned proximal to said expansion portion. According to the invention, said first attachment portion further comprises a recess, arranged so as to continue from said second line of weakening and separating a portion of said distal segment from said expansion portion, and a ramped surface, configured to guidingly move said portion of said distal segment away from said longitudinal axis, during use.

Advantageously, said expansion anchor may comprise at least two deformable legs arranged adjacent to one another, each one adapted to stoppingly engage at a predetermined deformation, so as to prevent additional torsional and radial deformation, during use. Preferably, said at least two deformable legs may be circumferentially equidistantly spaced about said longitudinal axis.

Advantageously, said expansion anchor may further comprise a sleeve member coaxially arranged between said body portion and said tightening screw. Preferably, a distal end of said sleeve member may be adapted to operably engage with said expansion portion, so as to prevent contact between said tightening screw and said expansion portion moving from said distal end to said proximal end. Even more preferably, said sleeve member may be provided at said proximal end of said tubular sleeve.

### Brief Description of the Drawings

Embodiments of the invention are now described, by way of example only, hereinafter with reference to the accompanying drawings, in which:
**Figure 1** illustrates an expansion anchor from: **(A)** a side view; and **(B)** a perspective side view;
**Figure 2** shows a distal end of an expansion anchor in **(A)** an end view and **(B)** a side view, and **(C)** a section view of a deformable leg;
**Figure 3** illustrates a close-up of a distal end of an expansion anchor from: **(A)** a perspective end view; and **(B)** a perspective side view;
**Figure 4** shows a perspective view of an expansion anchor;
**Figure 5** shows **(A)** a perspective view of a distal end of an expansion anchor; and **(B)** an open (i.e. unfolded) sleeve of an expansion anchor in a first configuration.
**Figure 6** illustrates a close up view of the expansion anchor distal end; and
**Figure 7** illustrates an open (i.e. unfolded) sleeve of an expansion anchor in a second configuration.

### Detailed Description

The described example embodiment relates to an expansion anchor and particularly to an expansion anchor for use in the construction sector. However, the invention is not necessarily restricted expansion anchors for use in the construction sector altogether but may also be used to secure a plurality of components together.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

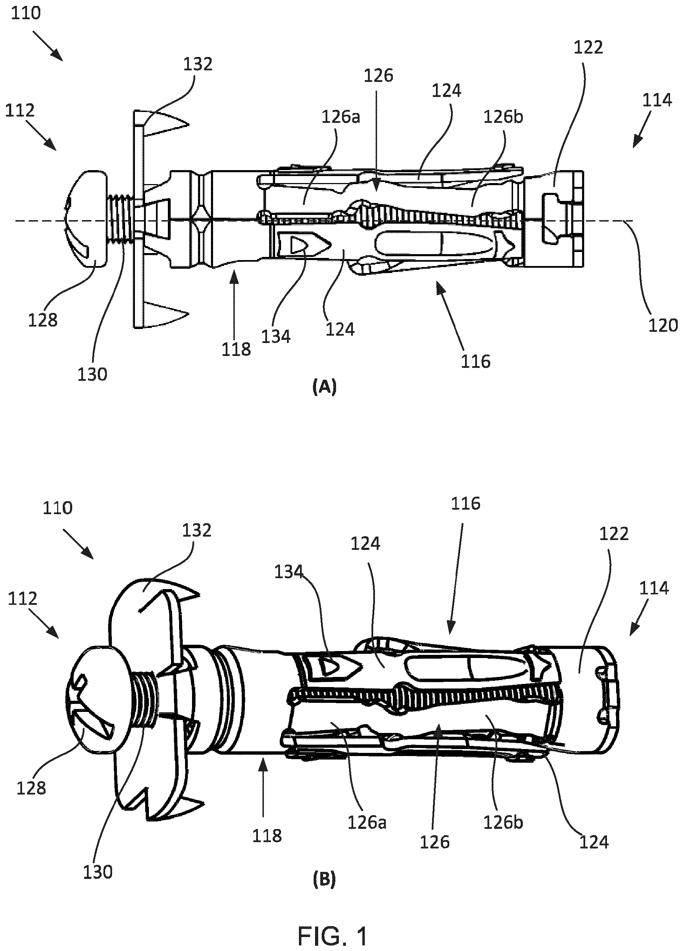

Figure 1 (A) and Figure 1 (B) show an anchoring member, namely a medium duty expansion anchor 110 that is suitable for insertion in an anchoring hole of a support or a wall. The meaning of light duty, medium duty and high duty are all common terms in the art and would be understood within the common general knowledge of the person skilled in the art. The expansion anchor 10 has a proximal end 112 and a distal end 114 and is structured such that it may be anchored or otherwise secured to a support or wall. It is preferable, though not essential, that the anchor 110 comprises a metal structure. It shall be understood that the anchor 110 may be secured to any wall structure. For example, the wall may be a solid structure or a non-solid structure. That is, the wall may be made from bricks, or the wall may be hollow, having defining spaces and/or a wall that is filled with a low-density material, or a non-compact wall such as a multi-layered wall or a wall made from a relatively friable material. The wall or structure may also be made from or filled with a material having a low compactness, or the wall may be made from a material of high density, such as, for example, concrete or natural stone or solid bricks.

The expansion anchor 110 comprises a sleeve 116 which, in this example, is tubular in shape and has a longitudinal axis 120. The anchor 110 also comprises an expansion portion 122 at the distal end 114 which, in this example, is an expansion nut 122. The anchor 110 has a tightening screw 128 having a drive head and a threaded shank 130 projecting from the bottom of the drive head in the direction of the longitudinal axis 120 towards the distal end 114 of the anchor 110. The threaded shank 130 extends through an internal hole (not shown) of the sleeve 116. That is, the threaded shank 130 extends from the bottom of the drive head of the tightening screw 128, through to the distal end 114 of the anchor. The expansion portion 122 has an internal thread which is designed to engage with the threaded shank 130, such that the expansion portion 122 is moved axially along the longitudinal axis 120 when rotated with a screwdriver or longitudinally expanded with an expansion tool. The expansion portion 122 is screwed onto the distal end 114 of the shank 130. It is preferable that the expansion portion 122 is frustoconical in shape, having a taper towards the proximal end 112 of the anchor 110. Alternatively, the expansion portion 122 may be cylindrical in shape (e.g. having rounded edges).

The sleeve 116 further comprises a body portion 118 at its proximal end. Expansion tabs 124 are attached to the body portion 118 and extend in a direction away from the body portion 118 towards the distal end 114. In this particular example, the expansion tabs 124 form an angle of 15 degrees with the longitudinal axis 120. However, it is envisaged that the expansion tabs 124 may form a different angle with the longitudinal axis 120 such as for example, 10 degrees to 50 degrees. It is preferred that the expansion tabs 124 have a free distal end portion (i.e. not connected to the expansion portion 122).

During use, the tightening screw 128 is tightened and the expansion portion 122 moves axially towards the proximal end 112 of the anchor 110. This axial movement of the threaded expansion portion 122 urges the ends of the expansion tabs 124 radially outward from the longitudinal axis 120. In this example, each expansion tab 124 is provided with a number of gripping portions, namely teeth 134 which, as will be explained, are capable of gripping a surface on which the expansion tabs 124 engage. A suitable flange 132 may be provided below the drive head of the tightening screw 128. The flange 132 may be made from metal in this example and prevents the tightening screw 128 from sinking into the wall or surface that the anchor 110 is to be attached to. This will be made clearer with reference to the subsequent drawings.

The anchor 110 is further provided with deformable legs 126, circumferentially arranged about the sleeve 116. Each one of the legs 126 extend between the body portion 118 and the expansion portion 122 of the sleeve 116 and are attached thereto. Thus, when the expansion portion 122 moves axially along the longitudinal axis 120 towards the body portion 118 (i.e. towards the proximal end 112), a pushing force is exerted onto the legs 126 from the distal end 114.

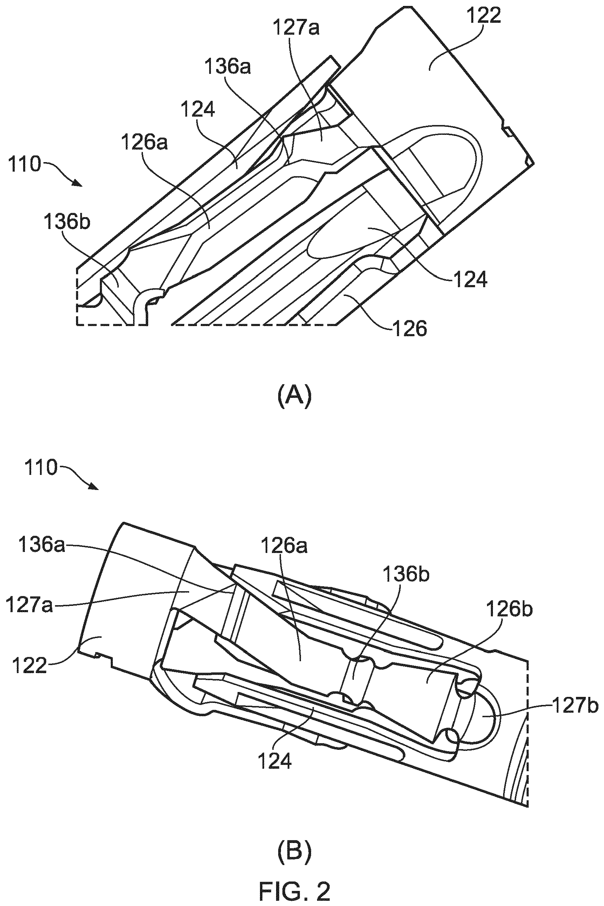

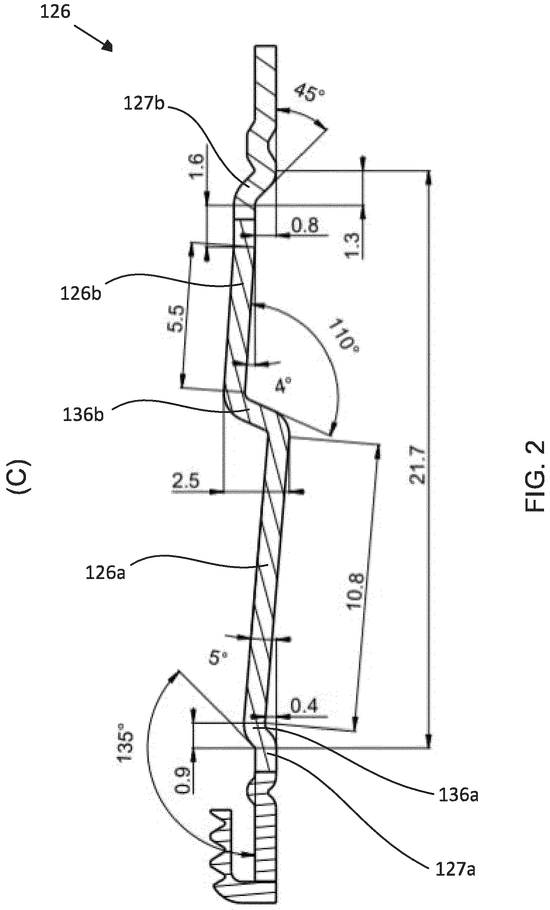

Referring now to Figures 2 (A), (B) and (C), a close-up of the distal end 114 of an embodiment of the expansion anchor 110 is shown. Here, the expansion anchor 110 shown has a deformable leg in between the body portion and the expansion portion 122. The deformable leg is formed from a distal segment 126a on the distal side of the expansion anchor 110, and a proximal segment 126b on the proximal side of the expansion anchor 110. The distal segment 126a and the proximal segment 126b are coupled together. A first attachment portion 127a links the distal segment 126a to the expansion portion 122. A second attachment portion 127b links the proximal segment 126b to the body portion. The first attachment portion 127a and the second attachment portion 127b are circumferentially offset from one another about the longitudinal axis of the expansion anchor 110. The first attachment portion 127a and the second attachment portion 127b are circumferentially offset from one another about the longitudinal axis of the expansion anchor 110. In this example, a first line of weakening 136b is provided between the distal segment 126a and the proximal segment 126b, having a smaller cross-sectional area in comparison to the segments 126a,126b. The first line of weakening 136b is provided inwardly facing (i.e. radially inwardly facing). A second line of weakening 136a is provided on the first attachment portion 127a, . The second line of weakening 136a is provided outwardly facing (i.e. radially outwardly facing). The first line of weakening 136b and the second line of weakening 136a are opposingly facing. The lines of weakening 136a,136b facilitate a predetermined deformation of the deformable legs 126, along selected areas of the legs 126. The first line of weakening 136b acts as a living hinge, integrally formed with and linking the distal segment 126a and the proximal segment 126b. The first line of weakening 136b, in this way, allows the distal segment 126a and the proximal segment 126b to bend relative to one another about the first line of weakening 136b. Since the first line of weakening 136b is inwardly facing, the axial movement of the threaded expansion portion 122 exerts a pushing force onto the distal end of the deformable leg 126, and urges the deformable leg 126 radially outward (i.e. in a direction opposite the inwardly facing first line of weakening 136b), such that the first line of weakening 136b folds outward to bend the distal segment 126a and the proximal segment 126b relative to one another. In substantially the same way, the second line of weakening 136a acts as a living hinge, integrally formed with and linking the first attachment portion 127a and the distal segment 126a. When the first line of weakening 136b folds outward, the outwardly facing second line of weakening 136a folds inwards (i.e. in a direction opposite the outwardly facing second line of weakening 136a), since the first line of weakening 136b and the second line of weakening 136a face opposite directions. The first line of weakening 136b has a width (i.e. size measurement of the deformable leg in a direction perpendicular to the longitudinal direction) that is small relative to the width of the distal segment 126a and the proximal segment 126b. The smaller width of the first line of weakening 136b relative to the distal segment 126a and proximal segment 126b provides a reduced cross-sectional area.

Figure 2 (C) shows a cross-section of the deformable leg 126 in more detail. The section view of the deformable leg 126 shows the arrangement of the distal segment 126a and the proximal segment 126b, linked by the first line of weakening 136b. In this example, the distal segment 126a and the proximal segment 126b are displaced apart by an angle of 110 degrees, but other ranges are envisaged such as 80 to 140 degrees, for example. The angle formed between the proximal segment 126b and the body portion (i.e. the second attachment portion 127b) is 45 degrees, but other ranges are envisaged such as 30 to 60 degrees, for example. The angle formed at the second line of weakening 136a is 135 degrees but other angles are envisaged such as 100 to 170 degrees, for example. The deformable leg 126 illustrated in Figure 2 (C) has a uniform thickness throughout. It is envisaged that certain parts of the deformable leg 126 may have a width or a thickness that is less than others so as to promote more deformation in those areas. For example, the first line of weakening 136b may have a smaller width and therefore a smaller cross-sectional area relative to the distal segment 126a and the proximal segment 126b. The second line of weakening 136a may have a smaller width or thickness and therefore a smaller cross-sectional area relative to the distal segment 126a. In some examples, the length of the distal segment 126a and/or the proximal segment 126b may be a different length. For example, the distal segment 126a and the proximal segment 126b may have a greater length, such as 12mm and 6.5mm respectively. Alternatively, the distal segment 126a and the proximal segment 126b may have a lesser length. The length of the distal segment 126a and the proximal segment 126b may be selected based on the desired deformation thereof. That is, the distance between the body portion and the expansion portion of the anchor 110 may be selected based on the desired extent of deformation of the expansion anchor 110 when it is expanded during use.

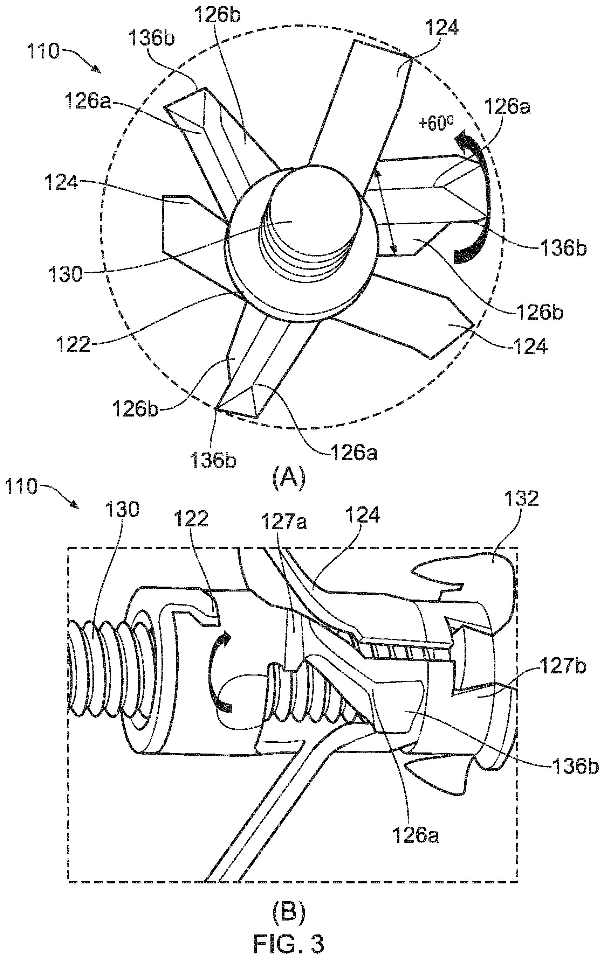

Figure 3 (A) and Figure 3 (B) show the distal end of an expansion anchor 110 after expansion, where the expansion portion 122 is moved axially along the threaded shank towards the body portion of the anchor 110, to exert a force onto the deformable leg 126. The first attachment portion 127a and the second attachment portion 127b of the deformable leg 126 are circumferentially offset from one another. As the deformable legs 126 are urged outward, the proximal segment 126b and the distal segment 126a of the deformable leg 126 deform torsionally apart from one another and are urged radially outwards relative to the longitudinal axis of the expansion anchor 110. More specifically, as the expansion portion 122 moves towards the body portion of the anchor 110, the distal segment 126a is urged towards the proximal side of the anchor 110. Since the first attachment portion 127a and the second attach portion 127b of the deformable leg 126 are circumferentially offset from one another, the distal segment 126a moves towards the proximal segment 126b at an angle offset from one another. The first line of weakening 136b urges outward which allows the deformable leg 126 to be radially offset and torsionally offset about the longitudinal axis of the expansion anchor 110. The proximal segment 126b and the distal segment 126a torsionally deform relative to one another about the first line of weakening 136b. The first line of weakening 136b provides a predetermined point of bending at which the deformable leg 126 deforms. In this example, three deformable legs 126 are provided circumferentially equidistantly spaced from one another. The body of the expansion anchor 110 has three expansion tabs 124 circumferentially equidistantly spaced from one another interjacent of the three deformable legs 126. In other examples, however, it is also envisaged that any other suitable number of deformable legs 126 may be provided, such as two, or four, or five or six, for example. The number of deformable legs 126 may be selected based on the desired surface area or extent of engagement between the expansion anchor 110 and the surface in which the anchor 110 is fixed.

In this particular example, the distal segment 126a and the proximal segment 126b torsionally deform such that the angle between them may be 60 degrees after expansion. Other angular offsets are also envisaged, such as 30 degrees, 45 degrees or 75 degrees, for example. Other smaller angular offsets are also envisaged, such as 2 degrees, 5 degrees, 10 degrees, 15 degrees, 20 degrees or 25 degrees, for example. At a predetermined angular offset, adjacent deformable legs 126 may be placed such that adjacent legs 126 engage with one another to prevent further torsional deformation and/or further radial deformation about the longitudinal axis of the expansion anchor 110. As the segments 126a,126b of the deformable leg 126 deform torsionally and radially outward, the expansion tabs 124 are urged outward relative to the longitudinal axis of the expansion anchor 110. After expansion, the proximal segment 126b is flush against the board in which the expansion anchor 110 is retained. In some examples, the distal segment 126a is torsionally offset from the proximal segment 126b and also engages with the board. This increases the area of engagement between the deformable legs 126 and the surface in which the expansion anchor 110 is retained which increases the structural rigidity of the anchor into the wall.

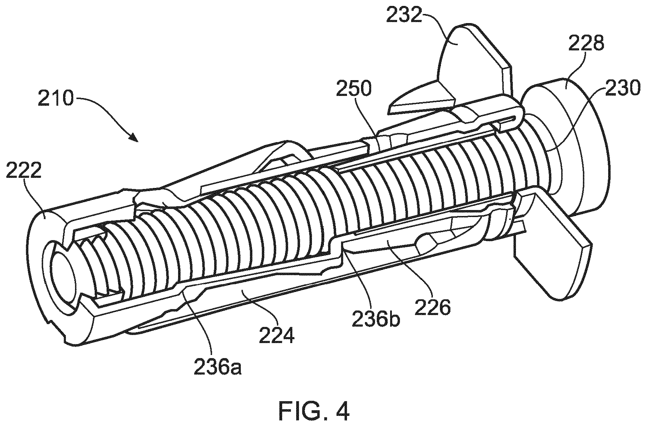

Figure 4 illustrates an alternative design that prevents the engagement of the deformable leg 226 with the tightening screw 230. In this example, a sleeve member in the form of a cylindrical sleeve 250 is provided towards the proximal end of the expansion anchor 210. When the expansion portion 222 moves from the distal end of the expansion anchor 210 towards the proximal end, the deformable leg 226 deforms in the way previously described. The second line of the weakening 236a of the deformable leg 226 projects inward towards the tightening screw 230. However, the second line of weakening 236a of the deformable leg 236 engages directly with the sleeve member 250 to prevent it from engaging with the tightening screw 250. The sleeve member 250 is provided between the tightening screw 230 and the deformable leg 226 to protect the deformable leg 226 from engaging with the tightening screw 230, and thus damaging the screw thread.

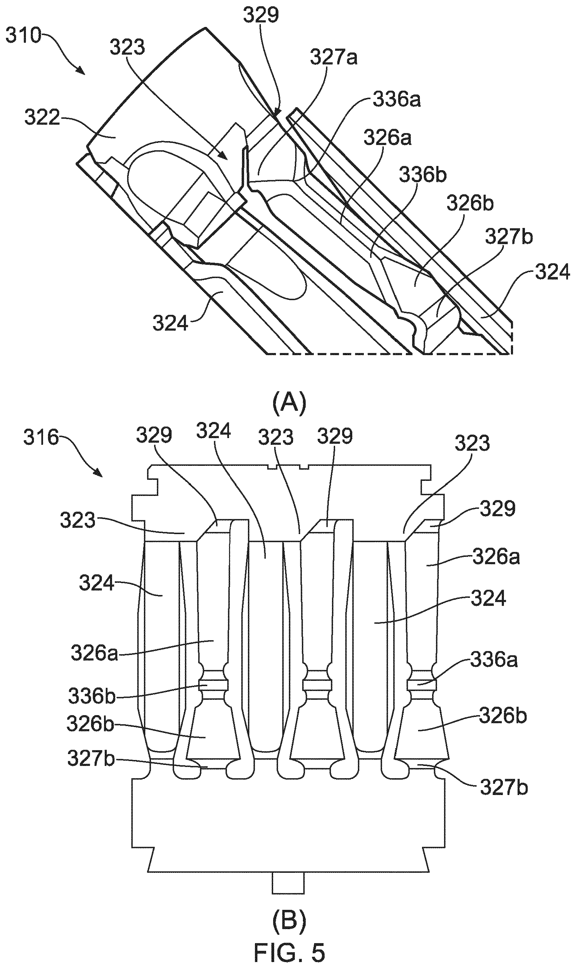

Figure 5 (A) and Figure 5 (B) illustrate an alternative embodiment for an expansion anchor 310 in which the first attachment portion 327a of the expansion anchor 310 comprises a recess 329 between a portion of the distal segment 326a and the expansion portion 322. The recess 329 or cut line may join up with the line of weakening 336a. The expansion portion 322 is provided with a ramping portion 323 (ramp surface) that, during expansion, engages with a disjointed part (i.e. separating the expansion portion and the distal segment 326a) of the first attachment portion 327a such that a direct engagement between the deformable leg 326 with the tightening screw is prevented. The engagement directly with the tightening screw is prevented by moving the end portion of the distal segment 326a away from the tightening screw, preventing a pressure point from being formed. Referring particularly to Figure 4 (B), each deformable leg 326 is provided with a recess 329, and a portion of the expansion portion 322 is provided with a corresponding ramping portion 323 that receives a second line of weakening 336b, such that engagement of the deformable leg 326 onto the tightening screw is prevented. The ramping portions 323 move an end portion of the distal segment 326a away from the tightening screw during expansion.

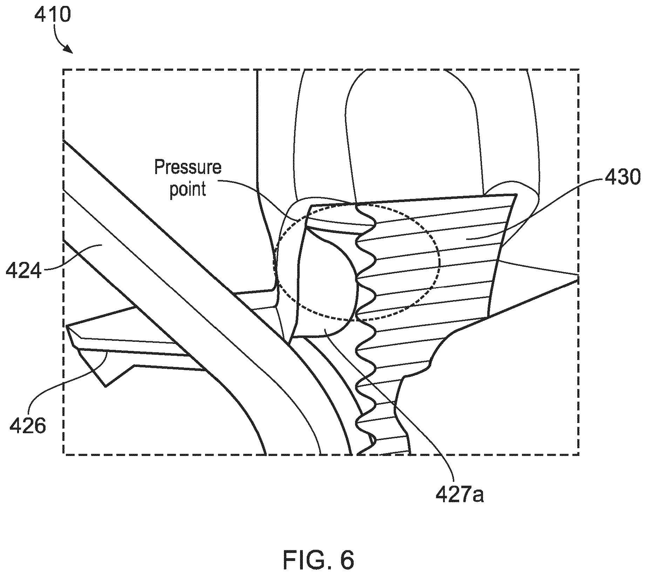

Figure 6 illustrates such a pressure point projected towards the tightening screw 430 in the absence of the aforementioned ramping portion. As the deformable legs 426 expand outward of the longitudinal axis, the first attachment portion 427a (i.e. the second line of weakening of the deformable leg 426) projects inward towards the tightening screw 430 to counteract a radial and torsional movement of the first line of weakening of the deformable leg 426. By provided a ramp on the expansion portion, the disjoined portion of the deformable leg 426 engages with the ramp instead of the tightening screw 430.

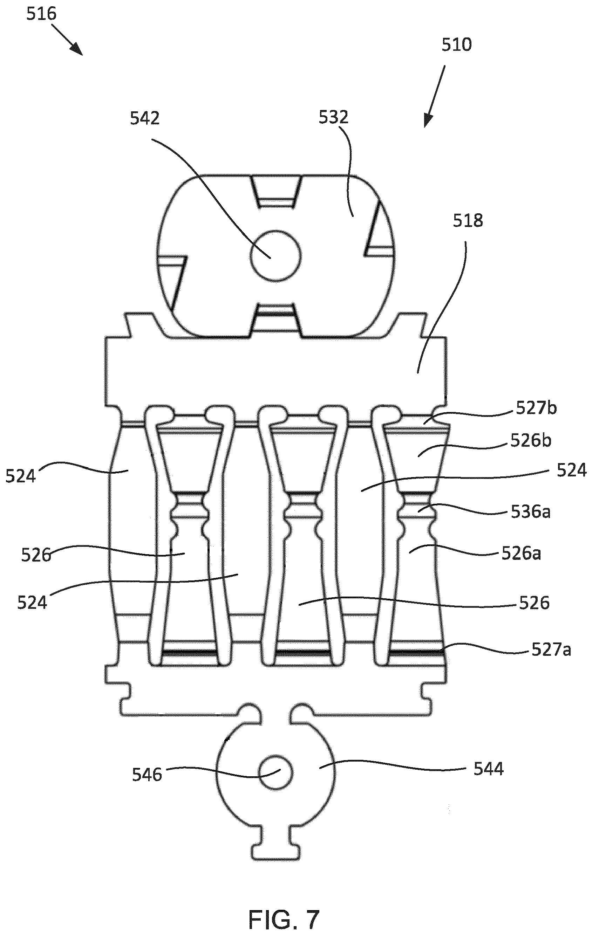

Figure 7 shows another example of a sleeve 516 of an expansion anchor 510 in an open arrangement, showing the sleeve 516 in an unfolded state (sheet metal stamping configuration). The body 518 of the expansion anchor 510 has three expansion tabs 524 spaced equidistantly from one another. Deformable legs 526 are positioned between the expansion tabs 524. The design of the deformable legs 526 in this example limits torsion when the anchor 510 is expanded, as will be described below. A flange 532 is provided on a proximal side, having a first central aperture 542 configured to receive the shank of the tightening screw. On a distal end, there is provided a further flange 544, having a second central aperture 546 (coaxial with the first central aperture 542) and which is threaded and configured for receiving the shank of the tightening screw. A greater width (i.e. size measurement of the deformable leg 526 in a direction perpendicular to the longitudinal direction) is provided outward of the second line of weakening 536a in a tapered manner. That is, from the second line of weakening 536a towards the distal end, the distal segment 526a tapers outward such that the width of the distal segment 526a increases in the distal direction. From the second line of weakening 536a towards the proximal end, the proximal segment 526b tapers outward such that the width of the proximal segment 526b increases in the proximal direction. In this particular example, more material is provided on the deformable leg 526 relative to the expansion tab 524 in order to increase the rigidity of the expansion anchor 510. Thus, when the expansion anchor 510 expands (i.e. when the expansion portion moves from the distal end towards the proximal end), the torsional deformation of the legs 526 are limited (minimised). Though not shown, the tightening screw may be provided with a tighter pitch to further limit torsional deformation. At the proximal end of the deformable leg 526, the proximal segment 526b is provided with a wider surface to increase the engagement contact with the wall in which the expansion anchor 510 is to be set. This further increases mechanical stability of the anchor 510 once is it set, and improves the structural performance of the anchor 510.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. An expansion anchor (110, 210, 310, 510) comprising:
a tubular sleeve (116) having a longitudinal axis and comprising an expansion portion (122, 222, 322) at a distal end (114) and a body portion (118) at a proximal end (112) and expansion tabs (124, 524) attached to said body portion and extending towards said distal end;
a tightening screw (128, 230, 430) configured to move said expansion portion along said longitudinal axis inside said expansion tabs so as to expand said tabs radially outwardly relative to said longitudinal axis; and
at least one deformable leg (126, 226, 326, 426, 526) extending between and attached to said body portion and to said expansion portion of said tubular sleeve, said deformable leg comprising at least two coupled segments, a distal segment (126a, 326a, 526a), having a first attachment portion (127a, 327a, 427a) linking said distal segment to said expansion portion and a proximal segment (126b, 526b), having a second attachment portion (127b) linking said proximal segment to said body portion the width of said proximal segment increasing towards said proximal end of said tubular sleeve,
**characterised in that** that said at least one deformable leg (126, 226, 326, 426, 526) comprises an outwardly facing line of weakening (136a, 236a, 336b, 536a) provided between said first attachment portion (127a, 327a, 427a) and said distal segment (126a, 326a, 526a),
and **in that** said first attachment portion (127a, 327a, 427a) further comprises a recess (329), arranged so as to continue from said line of weakening (136a, 236a, 336b, 536a) and separating a portion of said distal segment (126a, 326a, 526a) from said expansion portion (122, 222, 322), and a ramped surface (323), configured to guidingly move said portion of said distal segment (126a, 326a, 526a) away from said longitudinal axis, during use.

2. An expansion anchor (110, 210, 310, 510) according to claim 1, wherein said first (127a, 327a, 427a) and second attachment portions (127b) are circumferentially offset from each other about said longitudinal axis, so as to deform said deformable leg (126, 226, 326, 426, 526) torsionally and radially outwardly relative to said longitudinal axis when moving said expansion portion (122, 222, 322) from said distal end (114) towards said proximal end (112).

3. An expansion anchor (110, 210, 310, 510) according to any one of claim 1 and claim 2, wherein said width of said proximal segment (126b, 526b) increases uniformly towards said proximal end (112).

4. An expansion anchor (110, 210, 310, 510) according to any one of the preceding claims, wherein the width of said distal segment (126a, 326a, 526a) increases towards said distal end (114) of said tubular sleeve (116).

5. An expansion anchor (110, 210, 310, 510) according to any one of the preceding claims, wherein said expansion tabs (124, 524) have a first rigidity, and said deformable legs (126, 226, 326, 426, 526) have a second rigidity greater than said first rigidity.

6. An expansion anchor (110, 210, 310, 510) according to any one of the preceding claims, wherein said line of weakening (136a, 236a, 336b, 536a) is positioned proximal to said expansion portion (122, 222, 322).

7. An expansion anchor (110, 210, 310, 510) according to any one of the preceding claims, comprising at least two deformable legs (126, 226, 326, 426, 526) arranged adjacent to one another, each one adapted to stoppingly engage at a predetermined deformation, so as to prevent additional torsional and radial deformation, during use.

8. An expansion anchor (110, 210, 310, 510) according to claim 7, wherein said at least two deformable legs (126, 226, 326, 426, 526) are circumferentially equidistantly spaced about said longitudinal axis.

9. An expansion anchor according to any one of the preceding claims, further comprising a sleeve member coaxially arranged between said body portion and said tightening screw.

10. An expansion anchor (110, 210, 310, 510) according to claim 9, wherein a distal end of said sleeve member (250) is adapted to operably engage with said expansion portion (122, 222, 322), so as to prevent contact between said tightening screw (128, 230, 430) and said expansion portion (122, 222, 322) moving from said distal end (114) to said proximal end (112).

11. An expansion anchor (110, 210, 310, 510) according to any one of claims 9 and 10, wherein said sleeve member (250) is provided at said proximal end (112) of said tubular sleeve (116).

## Patentansprüche

1. Spreizdübel (110, 210, 310, 510), aufweisend:
eine rohrförmige Hülse (116), aufweisend eine Längsachse und einen Spreizabschnitt (122, 222, 322) an einem distalen Ende (114) und einen Körperabschnitt (118) an einem proximalen Ende (112) und Spreizlaschen (124, 524), die an dem Körperabschnitt angebracht sind und sich zu dem distalen Ende hin erstrecken;
eine Festspannschraube (128, 230, 430), die derart konfiguriert ist, dass sie den Spreizabschnitt entlang der Längsachse innerhalb der Spreizlaschen bewegt, um die Laschen in Bezug auf die Längsachse radial nach außen zu expandieren; und
mindestens einen verformbaren Schenkel (126, 226, 326, 426, 526), der sich zwischen dem Körperabschnitt und dem Spreizabschnitt der rohrförmigen Hülse erstreckt und an diesem befestigt ist, wobei der verformbare Schenkel, mindestens zwei verbundene Segmente, ein distales Segment (126a, 326a, 526a) mit einem ersten Befestigungsabschnitt (127a, 327a, 427a), der das distale Segment mit dem Spreizabschnitt verbindet, und ein proximales Segment (126b, 526b) mit einem zweiten Befestigungsabschnitt (127b), der das proximale Segment mit dem Körperabschnitt verbindet, aufweist, wobei die Breite des proximalen Segments in Richtung des proximalen Endes der rohrförmigen Hülse zunimmt;
**dadurch gekennzeichnet, dass** der mindestens eine verformbare Schenkel (126, 226, 326, 426, 526) eine nach außen weisende Sollbruchlinie (136a, 236a, 336b, 536a) aufweist, die zwischen dem ersten Befestigungsabschnitt (127a, 327a, 427a) und dem distalen Segment (126a, 326a, 526a) vorgesehen ist;
und dadurch, dass der erste Befestigungsabschnitt (127a, 327a, 427a) ferner eine Aussparung (329) aufweist, die derart angeordnet ist, dass sie sich von der Sollbruchlinie (136a, 236a, 336b, 536a) fortsetzt und einen Abschnitt des distalen Segments (126a, 326a, 526a) von dem Spreizabschnitt (122, 222, 322) trennt, und eine abgeschrägte Oberfläche (323), die derart konfiguriert ist, dass sie den Abschnitt des distalen Segments (126a, 326a, 526a) während des Gebrauchs führend von der Längsachse wegbewegt.

2. Spreizdübel (110, 210, 310, 510) nach Anspruch 1, wobei der erste (127a, 327a, 427a) und der zweite Befestigungsabschnitt (127b) um die Längsachse in Umfangsrichtung gegeneinander versetzt sind, um den verformbaren Schenkel (126, 226, 326, 426, 526) in Bezug auf die Längsachse drehend und radial nach außen zu verformen, wenn der Spreizabschnitt (122, 222, 322) von dem distalen Ende (114) zu dem proximalen Ende (112) bewegt wird.

3. Spreizdübel (110, 210, 310, 510) nach einem der Ansprüche 1 und 2, wobei die Breite des proximalen Segments (126b, 526b) gleichmäßig in Richtung auf das besagte proximale Ende (112) zunimmt.

4. Spreizdübel (110, 210, 310, 510) nach einem der vorhergehenden Ansprüche, wobei die Breite des distalen Segments (126a, 326a, 526a) in Richtung auf das distale Ende (114) der rohrförmigen Hülse (116) zunimmt.

5. Spreizdübel (110, 210, 310, 510) nach einem der vorhergehenden Ansprüche, wobei die Spreizlaschen (124, 524) eine erste Steifigkeit aufweisen und die verformbaren Schenkel (126, 226, 326, 426, 526) eine zweite Steifigkeit aufweisen, die größer als die erste Steifigkeit ist.

6. Spreizdübel (110, 210, 310, 510) nach einem der vorhergehenden Ansprüche, wobei die Sollbruchlinie (136a, 236a, 336b, 536a) proximal zu dem Spreizabschnitt (122, 222, 322) positioniert ist.

7. Spreizdübel (110, 210, 310, 510) nach einem der vorhergehenden Ansprüche, der mindestens zwei nebeneinander angeordnete verformbare Schenkel (126, 226, 326, 426, 526) aufweist, die jeweils geeignet sind, um bei einer vorbestimmten Verformung in Anschlageingriff zu stehen, um zusätzliche Torsions- und Radialverformungen während des Gebrauchs zu verhindern.

8. Spreizdübel (110, 210, 310, 510) nach Anspruch 7, wobei die mindestens zwei verformbaren Schenkel (126, 226, 326, 426, 526) in Umfangsrichtung in gleichen Abständen um die Längsachse beabstandet sind.

9. Spreizdübel nach einem der vorhergehenden Ansprüche, ferner ein Hülsenelement aufweisend, das koaxial zwischen dem Körperabschnitt und der Festspannschraube angeordnet ist.

10. Spreizdübel (110, 210, 310, 510) nach Anspruch 9, wobei ein distales Ende des Hülsenelements (250) geeignet ist, mit dem Spreizabschnitt (122, 222, 322) in Wirkeingriff zu kommen, um einen Kontakt zwischen der Festspannschraube (128, 230, 430) und dem Spreizabschnitt (122, 222, 322) zu verhindern, der sich von dem distalen Ende (114) zu dem proximalen Ende (112) bewegt.

11. Spreizdübel (110, 210, 310, 510) nach einem der Ansprüche 9 und 10, wobei das Hülsenelement (250) an dem proximalen Ende (112) der rohrförmigen Hülse (116) vorgesehen ist.

## Revendications

1. Cheville à expansion (110, 210, 310, 510) comprenant :
un manchon tubulaire (116) ayant un axe longitudinal et comprenant une portion d'expansion (122, 222, 322) au niveau d'une extrémité distale (114) et une portion corps (118) au niveau d'une extrémité proximale (112) et des pattes d'expansion (124, 524) fixées à ladite portion corps et s'étendant vers ladite extrémité distale ;
une vis de serrage (128, 230, 430) configurée pour déplacer ladite portion d'expansion le long dudit axe longitudinal à l'intérieur desdites pattes d'expansion de manière à élargir lesdites pattes radialement vers l'extérieur par rapport audit axe longitudinal ; et
l'au moins une jambe déformable (126, 226, 326, 426, 526) s'étendant entre et fixé à ladite portion corps et à ladite portion d'expansion dudit manchon tubulaire, ladite jambe déformable comprenant l'au moins deux segments couplés, un segment distal (126a, 326a, 526a), ayant une première portion de fixation (127a, 327a, 427a) reliant ledit segment distal à ladite portion d'expansion et à un segment proximal (126b, 526b), ayant une deuxième portion de fixation (127b) reliant ledit segment proximal à ladite portion corps ; la largeur dudit segment proximal augmentant vers ladite extrémité proximale dudit manchon tubulaire,
**caractérisée en ce que** ladite au moins une jambe déformable (126, 226, 326, 426, 526) comprend une ligne d'affaiblissement (136a, 236a, 336b, 536a) tournée vers l'extérieur prévue entre ladite première portion de fixation (127a, 327a, 427a) et ledit segment distal (126a, 326a, 526a),
et **en ce que** ladite première portion de fixation (127a, 327a, 427a) comprend en outre un évidement (329), agencé de manière à continuer à partir de ladite ligne d'affaiblissement (136a, 236a, 336b, 536a) et à séparer une portion dudit segment distal (126a, 326a, 526a) de ladite portion d'expansion (122, 222, 322) et une surface inclinée (323), configurée pour déplacée de manière guidante ladite portion dudit segment distal (126a, 326a, 526a) à l'écart dudit axe longitudinal, pendant l'utilisation.

2. Cheville à expansion (110, 210, 310, 510) selon la revendication 1, dans laquelle lesdites première (127a, 327a, 427a) et deuxième (127b) portions de fixation sont décalées circonférentiellement l'une par rapport à l'autre autour dudit axe longitudinal, de manière à déformer ladite jambe déformable (126, 226, 326, 426, 526) en torsion et radialement vers l'extérieur par rapport audit axe longitudinal lors du déplacement de ladite portion d'expansion (122, 222, 322) depuis ladite extrémité distale (114) vers ladite extrémité proximale (112).

3. Cheville à expansion (110, 210, 310, 510) selon l'une quelconque de la revendication 1 et de la revendication 2, dans laquelle ladite largeur dudit segment proximal (126b, 526b) augmente uniformément vers ladite extrémité proximale (112).

4. Cheville à expansion (110, 210, 310, 510) selon l'une quelconque des revendications précédentes, dans laquelle la largeur dudit segment distal (126a, 326a, 526a) augmente vers ladite extrémité distale (114) dudit manchon tubulaire (116).

5. Cheville à expansion (110, 210, 310, 510) selon l'une quelconque des revendications précédentes, dans laquelle lesdites pattes d'expansion (124, 524) ont une première rigidité, et lesdites jambes déformables (126, 226, 326, 426, 526) ont une deuxième rigidité supérieure à ladite première rigidité.

6. Cheville à expansion (110, 210, 310, 510) selon l'une quelconque des revendications précédentes, dans laquelle ladite ligne d'affaiblissement (136a, 236a, 336b, 536a) est positionnée proximale à ladite portion d'expansion (122, 222, 322).

7. Cheville à expansion (110, 210, 310, 510) selon l'une quelconque des revendications précédentes, comprenant au moins deux jambes déformables (126, 226, 326, 426, 526) agencées de manière adjacente l'une par rapport à l'autre, chacune étant adaptée pour venir en prise avec arrêt au niveau d'une déformation prédéterminée, de manière à empêcher une déformation supplémentaire en torsion et radiale, pendant l'utilisation.

8. Cheville à expansion (110, 210, 310, 510) selon la revendication 7, dans laquelle lesdites au moins deux jambes déformables (126, 226, 326, 426, 526) sont espacées de manière équidistante circonférentiellement autour dudit axe longitudinal.

9. Cheville à expansion selon l'une quelconque des revendications précédentes, comprenant en outre un organe manchon agencé coaxialement entre ladite portion corps et ladite vis de serrage.

10. Cheville à expansion (110, 210, 310, 510) selon la revendication 9, dans laquelle une extrémité distale dudit organe manchon (250) est adaptée pour venir en prise de manière fonctionnelle avec ladite portion d'expansion (122, 222, 322), de manière à empêcher le contact entre ladite vis de serrage (128, 230, 430) et ladite portion d'expansion (122, 222, 322) se déplaçant de ladite extrémité distale (114) à ladite extrémité proximale (112).

11. Cheville à expansion (110, 210, 310, 510) selon l'une quelconque des revendications 9 et 10, dans laquelle ledit organe manchon (250) est prévu au niveau de ladite extrémité proximale (112) dudit manchon tubulaire (116).
